# FASCICULE DE BREVET EUROPEEN

(11) **EP 0 924 826 B1**
(45) Date de publication et mention de la délivrance du brevet: **26.07.2006**
(21) Numéro de dépôt: 98402928.0
(22) Date de dépôt: 25.11.1998
(51) Int. Cl.: H02B 1/24

(54) **Dispositif de commutation d'un générateur de centrale électrique et d'un transformateur avec un sectionneur à trois positions**
Schaltvorrichtung für den Generator einer Kraftwerkanlage und einen Transformator mit einem Dreistellungsschalter
Switching device for a generator in a power plant and a transformer with a three-position circuit breaker

(43) Date de publication de la demande: 23.06.1999
(73) Titulaire: Areva T&D SA, 92309 Levallois-Perret Cedex (FR)
(72) Inventeur: Biquez, François, 69530 Brignais (FR); Willieme, Jean-Marc, 69350 La Mulatiere (FR)
(74) Mandataire: Poulin, Gérard

(56) Documents cités:
- EP-A- 0 567 773

## Description

l'invention se rapporte à un dispositif de commutation entre un générateur de centrale électrique et un transformateur de réseau de moyenne ou de haute tension, qui comprend un disjoncteur avec une position ouverte pour isoler le générateur du réseau et une position fermée pour relier le générateur au réseau, et qui comprend un sectionneur avec un pôle fixe relié au générateur et avec un contact qui est relié au pôle fixe et qui est mobile par rapport à ce dernier pour occuper, lorsque le disjoncteur est ouvert, une première position reliant le générateur à un circuit de démarrage et une deuxième position reliant le générateur à une mise à la terre.

Un dispositif de ce type est connu notamment de la demande de brevet européen EP A 0 567 773. Le contact mobile du sectionneur est prévu pour occuper une troisième position dans laquelle il relie, par l'intermédiaire du pôle fixe, le générateur au transformateur, lorsque le disjoncteur est fermé. Dans cette troisième position, le contact mobile supporte une intensité de courant électrique propre au régime permanent du générateur, tandis que dans les première et deuxième positions, lorsque le disjoncteur est ouvert, le contact mobile supporte une intensité de courant électrique propre aux régimes transitoires du générateur lors du démarrage ou lors de la mise à la terre. Le contact mobile est prévu pour tenir l'un et l'autre types des régimes du courant électrique, ce qui pose un problème de dimension et de coût du contact mobile.

Le but de l'invention est d'optimiser les dimensions et le coût du sectionneur du dispositif de commutation.

A cet effet, l'invention a pour objet un dispositif de commutation entre un générateur de centrale électrique et un transformateur de réseau de moyenne ou de haute tension, qui comprend un disjoncteur avec une position ouverte pour isoler le générateur du réseau et une position fermée pour relier le générateur au réseau, et qui comprend un sectionneur avec un pôle fixe relié au générateur et avec un contact qui est relié au pôle fixe et qui est mobile par rapport à ce dernier pour occuper, lorsque le disjoncteur est ouvert, une première position reliant le générateur à un circuit de démarrage et une deuxième position reliant le générateur à une mise à la terre, caractérisé en ce que le contact mobile du sectionneur possède une troisième position dans laquelle il forme un appendice sensiblement équipotentiel du pôle fixe du sectionneur lorsque le disjoncteur est fermé.

Dans cette troisième position, le contact mobile n'est pas parcouru par le courant électrique de régime permanent du générateur, ce qui permet de calculer sa forme et de choisir son matériau constitutif en fonction des exigences de tenue à l'échauffement dues aux seuls régimes transitoires du générateur. D'où il résulte avantageusement que le dispositif de commutation selon l'invention possède un sectionneur de taille réduite et de faible coût.

D'autres avantages de l'invention apparaîtront à la lecture de la description d'un mode de réalisation de l'invention illustré par les dessins.

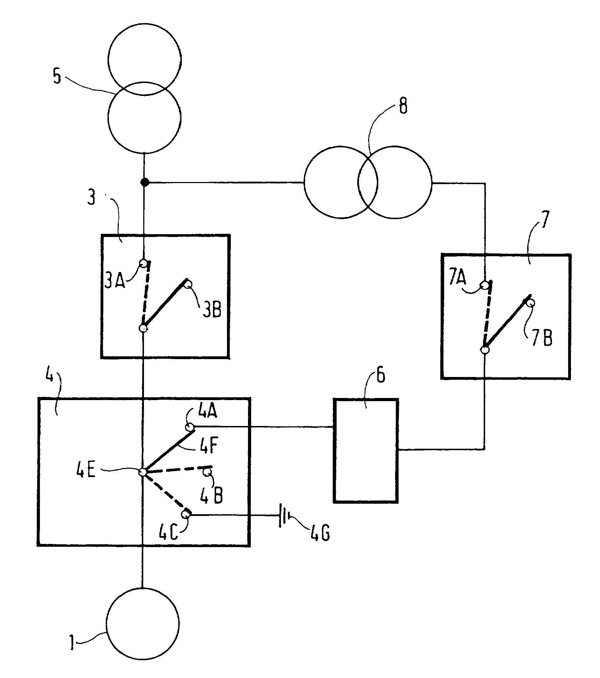

La figure unique montre un schéma bloc d'un dispositif de commutation selon l'invention.

Sur la figure unique, un générateur 1 de centrale électrique est commuté à un transformateur 5 de réseau de moyenne et de haute tension par l'intermédiaire d'un dispositif de commutation qui comprend un disjoncteur 3. Le générateur de centrale électrique est du type d'une turbine à gaz ou d'une turbine à cycle combiné à gaz et à vapeur d'eau, et comprend des jeux de barres constitués de trois conducteurs entourés de trois enveloppe métalliques dans lesquelles s'insèrent trois phases du disjoncteur de générateur. Le disjoncteur comprend une position de fermeture référencée 3A pour relier le générateur au réseau, et une position d'ouverture référencée 3B pour disjoncteur de réseau, monté entre le transformateur et le réseau de moyenne ou de haute tension. De préférence, le disjoncteur est du type d'un disjoncteur de générateur, monté entre le générateur et le transformateur pour protéger mutuellement ces deux éléments en cas de mauvais fonctionnement de l'un ou de l'autre. Le disjoncteur de générateur est disposé dans une enveloppe métallique remplie d'un gaz diélectrique sous pression.

Un sectionneur 4 est monté entre le générateur 1 et le transformateur 5, et de préférence entre le générateur 1 et le disjoncteur 3 quand ce dernier est du type d'un disjoncteur de générateur. Un pôle fixe 4E du sectionneur est relié au générateur et à un contact mobile 4F qui est déplacé, lorsque le disjoncteur est ouvert dans la position 3B, pour occuper une première position référencée 4A reliant le générateur à un circuit de démarrage, ou pour occuper une deuxième position référencée 4C reliant le générateur à une mise à la terre 4G.

Le circuit de démarrage est d'un type connu en soi. Il comprend, en série, un transformateur d'alimentation 8, un disjoncteur 7 avec une position d'ouverture 7B et une position de fermeture 7A, et un convertisseur statique à fréquence variable 6 qui permet d'alimenter la générateur en régime moteur pour lancer la turbine. Un compartiment du disjoncteur du circuit de démarrage est reliée au transformateur, et un compartiment du convertisseur statique à fréquence variable est reliée au sectionneur par l'intermédiaire de la première position 4A du contact mobile 4F.

La mise à la terre 4G est également d'un type connu.

Selon l'invention, le contact mobile 4F possède une troisième position 4B dans laquelle il forme un appendice sensiblement équipotentiel du pôle fixe 4E du sectionneur 4 lorsque le disjoncteur 3 est fermé dans la position 3A. Dans le régime permanent du générateur, le dispositif de commutation transfère le courant électrique au transformateur par l'intermédiaire du pôle fixe 4E du sectionneur 4 et du disjoncteur 3. Le contact mobile 4F n'est pas parcouru par ce courant de régime permanent, ce qui permet de calculer sa forme et de choisir son matériau constitutif en fonction des exigences de tenue à l'échauffement par rapport aux seuls régimes transitoires du générateur. A titre d'exemple, l'intensité du courant est de l'ordre de 10000 amères (A) en régime permanent. Elle est de l'ordre de 60000 A pendant 1 seconde lors de la mise à la terre du générateur, ou de 2000 A pendant 15 minutes lors du démarrage du générateur. Le contact mobile, qui est par exemple un couteau, possède une section utile pour supporter les régimes transitoires environ deux fois plus petite que pour supporter le régime permanent. Le dispositif selon l'invention permet par conséquent de réduire les dimensions utiles du sectionneur, et par suite de diminuer son coût.

Lors du démarrage du générateur, on ouvre le disjoncteur 3 en position 3B, on déplace le contact mobile 4F dans la première position 4A reliant le générateur 1 au circuit de démarrage, et on ferme le disjoncteur d'alimentation dans la position 7A. Lorsque la turbine du générateur est en mesure d'accélérer de façon autonome, on ouvre le disjoncteur d'alimentation dans la position 7B, on déplace le contact mobile 4F dans la troisième position 4B et on ferme le disjoncteur 3 en position 3A.

Lors de la maintenance du générateur 1, on ouvre le disjoncteur 3 dans la position 3B, on déplace le contact mobile 4F dans la deuxième position 4C reliant le générateur 1 à la mise à la terre 4G. Une intervention sur le générateur est alors effectuée en toute sécurité vis à vis des risques d'électrocution. On note que dans le mode préféré de réalisation où le disjoncteur 3 est monté entre le générateur 1 et le transformateur 5, ce dernier reste sous tension, même lors de la mise à la terre du générateur.

Lors de la maintenance du disjoncteur 3, dans le mode préféré de réalisation de l'invention, on ouvre ce dernier dans la position 3B, et on déplace le contact mobile 4F dans la deuxième positon 4B pour relier le générateur 1 à la mise à la terre 4G. Le disjoncteur de générateur 3 étant monté entre le sectionneur et le transformateur, le compartiment du disjoncteur qui est relié au pôle fixe du sectionneur est mis à la terre avec le générateur 1. L'autre compartiment est mis à la terre par exemple à l'aide d'un canne de terre volante. Une intervention sur le disjoncteur est alors effectuée en toute sécurité vis à vis des risques d'électrocution.

## Revendications

1. Un dispositif de commutation entre un générateur (1) de centrale électrique et un transformateur (5) de réseau de moyenne ou de haute tension, qui comprend un disjoncteur (3) avec une position ouverte (3B) pour isoler le générateur du réseau et une position fermée (3A) pour relier le générateur au réseau, et qui comprend un sectionneur (4) avec un pôle fixe (4E) relié au générateur et avec un contact (4F) relié au pôle fixe et mobile par rapport à ce dernier pour occuper, lorsque le disjoncteur est ouvert, une première position (4A) reliant le générateur à un circuit de démarrage (6, 7, 8) et une deuxième position (4C) reliant le générateur à une mise à la terre (4G), **caractérisé en ce que** le contact mobile (4F) du sectionneur possède une troisième position (4B) dans laquelle il forme un appendice sensiblement équipotentiel du pôle fixe (4E) du sectionneur (4) lorsque le disjoncteur (3) est fermé.

2. Le dispositif selon la revendication 1, dans lequel le disjoncteur (3) est un disjoncteur de générateur monté entre le générateur (1) et le sectionneur (4).

## Claims

1. Switchgear between a power station generator (1) and a transformer (5) of a medium voltage or high voltage network, said switchgear comprising a circuit breaker (3) having an open position (3B) for isolating the generator from the network, and a closed position (3A) for connecting the generator to the network, together with a disconnector (4) having a fixed pole (4E) connected to the generator and a contact (4F) connected to the fixed pole and movable relative thereto to occupy, when the circuit breaker is open, a first position (4A) connecting the generator to a starter circuit (6, 7, 8) and a second position (4C) connecting the generator to ground (4G), said switchgear being **characterized in that** the moving contact (4F) of the disconnector also possesses a third position (4B) in which it forms a substantially equipotential appendix for the fixed pole (4E) of the disconnector (4) when the circuit breaker (3) is closed.

2. Switchgear according to claim 1, in which the circuit breaker (3) is a generator circuit breaker connected between the generator (1) and the disconnector (4).

## Patentansprüche

1. Schaltvorrichtung zwischen einem Generator (1) einer Kraftwerkanlage und einem Transformator (5) für ein Mittel- bzw. Hochspannungsnetz, die einen Leistungsschalter (3) mit einer geöffneten Stellung (3B) zum Trennen des Generators vom Netz und mit einer geschlossenen Stellung (3A) zum Verbinden des Generators mit dem Netz aufweist und einen Trennschalter (4) mit einem mit dem Generator verbundenen festen Pol (4E) und mit einem mit dem festen Pol verbundenen und zu letzterem beweglichen Kontakt (4F) enthält, um dann, wenn der Leistungsschalter geöffnet ist, eine erste Stellung (4A) einzunehmen, welche den Generator mit einem Anfahrkreis (6, 7, 8) verbindet, sowie eine zweite Stellung (4C), welche den Generator mit einer Erdung (4G) verbindet, **dadurch gekennzeichnet, dass** der bewegliche Kontakt (4F) des Trennschalters eine dritte Stellung (4B) besitzt, in welcher er einen im wesentlichen äquipotentialen Ansatz des festen Pols (4E) des Trennschalters (4) bildet, wenn der Leistungsschalter (3) geschlossen ist.

2. Vorrichtung nach Anspruch 1, wobei der Leistungsschalter (3) ein zwischen dem Generator (1) und dem Trennschalter (4) geschalteter Generatorleistungsschalter ist.
